# EUROPEAN PATENT APPLICATION

(11) **EP 3 593 887 A1**
(43) Date of publication of application: **15.01.2020**
(21) Application number: 18183492.0
(22) Date of filing: 13.07.2018
(51) Int. Cl.: B01D 53/00, B01D 53/66

(54) **THIOSULFATE COATED SUBSTRATE AND METHOD FOR COATING A SUBSTRATE SURFACE WITH A THIOSULFATE LAYER**

(71) Applicant: Max-Planck-Gesellschaft zur Förderung der Wissenschaften e.V., 80539 München (DE)
(72) Inventor: The designation of the inventor has not yet been filed
(74) Representative: v. Bezold & Partner Patentanwälte - PartG mbB

(57) **Abstract**

The present invention relates to a method for coating a substrate surface with a thiosulfate layer which comprises at least the following steps:
a) providing a melt of a thiosulfate salt;
b) applying the melt on a substrate surface;
c) allowing the melt to solidify at ambient temperature, in particular at a temperature in the range from 35 °C to 15 °C.

The material of the substrate surface to be coated may be selected from the group comprising metals, alloys, metal oxides, ceramics, polymers, silica, in particular a silica gel, glasses and composite substrates.

In a preferred embodiment, the substrate surface is a metal surface, in particular selected from the group comprising stainless steel, titanium, copper and aluminum.

In another preferred embodiment, the substrate surface comprises or represents a surface, in particular the inner surface, of a tubular element or channel or of a plurality thereof.

A second aspect of the invention relates to the thiosulfate coated substrate surface obtainable with the above method and to a device or component thereof comprising the same.

Typically, said device is a device for cleaning and/or analyzing gas streams and preferably an ozone scrubber. The device or component thereof may be, e.g., an air filter, air purifier or exhaust fume neutralizer.

## Description

In the field of atmospheric chemistry measurement, the presence of ozone in gas phase air samples is undesirable since ozone is known to oxidize many analytes, e.g. volatile organic compounds (VOC), thereby altering the real concentrations of the compounds of interest and causing artefacts. Therefore, removing ozone from the air sample before on-line measurement or sample collection is often crucial and a variety of ozone scrubbers which selectively remove ozone from the sample stream are commonly used.

One approach uses thiosulfate coated quartz filters as ozone scrubbers. However, the drawback with this method is that all the analyte VOCs need to flow through the quartz filter perpendicularly, thus some compounds of interest are ad- and absorbed on the sodium thiosulfate quartz filter. Furthermore, the surface areas of commonly used quartz filters are rather large, which provides a large number of active sites for the analytes to interact, thus prone to cause losses and hysteresis effects.

This problem might be avoided by using a different 3-dimensional geometry of ozone scrubbers and different substrate materials for the active thiosulfate layer. One class of substrate materials of particular interest for this purpose would be chemically inert metals, such as, e.g., stainless steel.

However, prior to the present invention it had not been possible to successfully coat such metal substrate surfaces, and in particular a stainless steel substrate, effectively with a thiosulfate layer having a desired thickness and exhibiting a high adhesion to the substrate surface and, thus, enabling the effective application of the coated substrate in an ozone scrubber.

### Background of the invention

Therefore, a main object of the present invention was to provide novel and improved means to provide a thiosulfate layer, in particular a thiosulfate layer with superior binding characteristics, on a variety of substrate surfaces, in particular on a metal substrate surface.

This objective has been achieved by providing the coating method according to present claim 1 as well as the coated substrate according to claim 11. More specific and/or preferred embodiments of the invention are the subject of further claims.

### Description of the invention

The method of the present invention for coating a substrate surface with a thiosulfate layer comprises at least the following steps:
a) providing a melt of a thiosulfate salt;
b) applying the melt on a substrate surface;
c) allowing the melt to solidify at ambient temperature, in particular at a temperature in the range from 35 °C to 15 °C.

Said thiosulfate salt may be principally any thiosulfate salt known in the art, in particular a thiosulfate salt wherein the cation is selected from cations of group I or group II metals of the periodic table of elements, such as e.g. lithium, sodium, potassium, rubidium, cesium, magnesium, strontium, barium. Preferably, the thiosulfate salt is a sodium thiosulfate salt, especially preferred sodium thiosulfate pentahydrate.

The material of the substrate surface to be coated may be selected from the group comprising metals, alloys, metal oxides, ceramics, polymers, silica, including a silica gel, glasses and composite substrates.

In a preferred embodiment, the substrate surface is a metal surface, in particular selected from the group comprising stainless steel, titanium, copper and aluminum.

Preferably, the substrate surface is analytically inert, not degassing VOCs and not providing many ad- or absorption sites, under typical ambient conditions of atmospheric chemistry analysis.

The shape of the substrate surface to be coated is not especially limited and said substrate surface may be planar or have a given 3-dimensional form. In one preferred embodiment, said substrate surface is a surface, preferably the inner surface, of a tubular element or channel or of a plurality thereof.

The substrate surface may, for example be part of a device for cleaning and/or analyzing gas streams, or of a component thereof, e.g. an air filter, air purifier or exhaust fume neutralizer. In particular, the substrate surface may be part of an ozone scrubber or a component thereof.

In one preferred embodiment, step b) and/ or step c) of the method according to the present invention are performed in the presence of a gaseous stream, such as air, including compressed or synthetic air, N₂, O₂, a noble gas, or mixtures thereof. Preferably, the gaseous stream is free of contaminants, in particular hydrocarbon free, and dry.

In another preferred embodiment, the substrate surface is submitted to a roughening and cleaning treatment in order to improve the adhesion properties of the surface. This treatment may comprise a step of brushing, e.g. with rotating metal wire brush or by abrasive blasting, and/or one or more steps of ultrasonication in a suitable liquid medium, e.g. acetone, isopropanol and deionized water as solvents, preferably in the given order for optimum contamination removal efficiency. This optimal order can be easily determined by the skilled artisan using routine experiments.

By the method according to the present invention, it is possible to obtain a thiosulfate layer, in particular a sodium thiosulfate layer, more specifically a sodium thiosulfate pentahydrate layer, on the substrate surface which has a favorable thickness in the range from 0.5 to 1.5 mm and a crystalline structure with excellent binding characteristics and is typically provided as a uniform coating.

Therefore, closely related aspects of the present invention relate to the coated substrates obtainable by the claimed method and articles comprising the same.

Said coated substrate may be any substrate, in particular any metal substrate, comprising at least one surface coated with a layer of a thiosulfate salt as defined above, in particular with a sodium thiosulfate layer, more specifically a sodium thiosulfate pentahydrate layer, which has a thickness in the range from 0.5 to 1.5 mm and which is further characterized by a crystalline structure with excellent binding characteristics.

The material of the substrate surface on which the coating layer has been deposited may be selected from the group comprising metals, alloys, metal oxides, ceramics, polymers, silica, in particular silica gels, glasses and composite substrates.

In a preferred embodiment, the substrate surface is a metal surface, in particular selected from the group comprising stainless steel, titanium, copper and aluminum.

In a more specific embodiment, the coated substrate comprises at least one stainless steel surface coated with a thiosulfate layer, in particular a sodium thiosulfate pentahydrate layer.

The shape of the substrate surface is not especially limited and said substrate surface may be planar or have a given 3-dimensional form. In one preferred embodiment, said substrate surface comprises or represents a surface, in particular the inner surface, of a tubular element or channel or of a plurality thereof.

The substrate surface may, for example be part of a device for cleaning and/or analyzing gas streams, or of a component thereof, e.g. an air filter. In particular, the substrate surface may be part of an ozone scrubber or a component thereof.

Thus, the subject matter of the present invention also relates to a component of a device, in particular an ozone scrubber, such as an air filter, air purifier or exhaust fume neutralizer, comprising the thiosulfate coated, in particular sodium thiosulfate pentahydrate coated, substrate as defined above as well as a device, in particular an ozone scrubber, comprising the component as defined above.

### Brief Description of the Figure

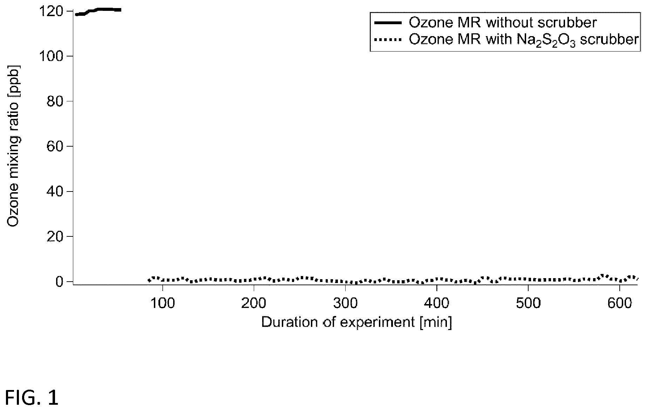

Fig. 1 shows the efficiency of a stainless steel ozone scrubber comprising a thiosulfate coated surface obtained by the method of the present invention versus the efficiency of an identical stainless steel ozone scrubber without a thiosulfate coated surface.

The following example is given to illustrate the present invention in more detail, without, however, limiting the same to the specific conditions and parameters thereof.

### EXAMPLE 1

As a model substrate, a tubular element made of stainless steel, e.g. a piece of gas grade stainless steel gas line (e.g. ¼" (6.35 mm) or ½" (12.70 mm) in diameter, around 5 to 10 cm in length) was provided and the inner surface thereof was coated with a thiosulfate layer as detailed below.

For an optimal sodium thiosulfate pentahydrate coating application on the stainless steel substrate, first the coating surface is preferably brushed, e.g. with a rotating metal brush, to achieve a higher surface roughness in order to provide better adhesion properties, followed by sequential cleaning procedure in ultrasonic bath with acetone, isopropanol and deionized water as solvents for optimum contamination removal efficiency. Thereafter, the stainless steel piece is baked out in an oven at 200 °C for 1 hour and allowed to cool to room temperature. Sodium thiosulfate pentahydrate powder is melted in an oven at 80 °C. When completely in the liquid phase, small aliquots (50-200 µl) of the sodium thiosulfate pentahydrate melt are applied to the stainless steel substrate with a pipette and flowed with dry and hydrocarbon free compressed air for an even coating. The sodium thiosulfate pentahydrate melt is kept in an oven at 80 °C in between the melt aliquot applications as the melt recrystallizes quickly at room temperature. Once a satisfactory even coating is obtained in the range of 0.5 to 1.5 mm the stainless steel piece is placed in an oven at 40 °C for overnight for slow dehydration.

Fig. 1 demonstrates that an exemplary sodium thiosulfate coated stainless steel substrate which had been prepared and coated according to the method detailed above effectively works as an ozone scrubber.

At first the ozone mixing ratio was measured in an air stream (120 ppb ozone in a flow of 1 standard L min⁻¹ of air carried by ¼" (6.35 mm) perfluoroalkoxy tubing at 24 °C) without an ozone scrubber (solid line) and directly after which sodium thiosulfate coated stainless steel ozone scrubber was added to the gas stream (dashed line). It is evident that the ozone scrubber which comprises a thiosulfate layer prepared by the method of the present invention very effectively quenches ozone from the passing air stream.

## Claims

1. A method for coating a substrate surface with a thiosulfate layer, comprising a least the following steps:
a) providing a melt of a thiosulfate salt;
b) applying the melt on a substrate surface;
c) allowing the melt to solidify at ambient temperature, in particular at a temperature in the range from 35 °C to 15 °C.

2. The method according to claim 1, wherein the thiosulfate salt comprises a cation selected from cations of group I or group II metals of the periodic table of elements.

3. The method according to claim 1, wherein the thiosulfate salt is a sodium thiosulfate, in particular sodium thiosulfate pentahydrate.

4. The method according to claim 1 or 2, wherein step b) and/ or step c) are performed in the presence of a gaseous stream, such as air, N₂, O₂, a noble gas, or mixtures thereof.

5. The method according to any one of claims 1-4, wherein the material of the substrate surface is selected from the group comprising metals, alloys, metal oxides, ceramics, polymers, silica, in particular silica gels, glasses and composite substrates.

6. The method according to claim 5, wherein the substrate surface is a metal surface.

7. The method according to claim 6, wherein the metal surface is selected from the group comprising stainless steel, titanium, copper and aluminum.

8. The method according to any one of claims 1-7, wherein the substrate surface is submitted to a roughening and cleaning treatment in order to improve the adhesion properties of the surface.

9. The method according to any one of claims 1-8, wherein a thiosulfate layer, in particular a sodium thiosulfate layer such as a sodium thiosulfate pentahydrate layer, which has a thickness in the range from 0.5 to 1.5 mm and a crystalline structure with excellent binding characteristics is produced on the substrate surface.

10. The method according to any one of claims 1-9, wherein the substrate surface is the surface of a component of an ozone scrubber.

11. A substrate, in particular a metal substrate, comprising at least one surface coated with a thiosulfate layer, in particular with a sodium thiosulfate layer such as a sodium thiosulfate pentahydrate layer, obtainable by the method according any one of claims 1-10 which has a thickness in the range from 0.5 to 1.5 mm.

12. The substrate according to claim 11, comprising at least one stainless steel surface coated with a sodium thiosulfate layer, in particular a sodium thiosulfate pentahydrate layer.

13. The method according to any one of claims 1-10 or the substrate according to claim 11 or 12, wherein the substrate surface comprises or represents a surface, in particular the inner surface, of a tubular element or channel or of a plurality thereof.

14. A device for cleaning and/or analyzing gas streams, or a component thereof, such as an air filter, air purifier or exhaust fume neutralizer, comprising the thiosulfate coated, in particular sodium thiosulfate coated substrate according to any one of claims 11-13.

15. The device or component according to claim 14, wherein the device is an ozone scrubber.
